# EUROPEAN PATENT APPLICATION

(11) **EP 3 450 468 A1**
(43) Date of publication of application: **06.03.2019**
(21) Application number: 17789157.9
(22) Date of filing: 28.03.2017
(51) Int. Cl.: C08F 8/30, B60C 1/00, C08C 19/25, C08F 2/38, C08F 36/04, C08L 15/00

(54) **PROCESS FOR PRODUCING MODIFIED POLYMER, MODIFIED POLYMER, RUBBER COMPOSITION, AND TIRE**

(30) Priority: 25.04.2016 JP 2016086948
(71) Applicant: Bridgestone Corporation, Tokyo 104-8340 (JP)
(72) Inventor: NAKATANI Kenji, Tokyo 104-8340 (JP); HIGA Tomoki, Tokyo 104-8340 (JP); TSUDA Shunsuke, Tokyo 104-8340 (JP)
(74) Representative: Oxley, Robin John George
(86) International application number: PCT/JP2017/012734
(87) International publication number: WO 2017/187868

(57) **Abstract**

The present disclosure provides a method for manufacturing with high productivity a modified polymer equivalent to the prior art blend of a modified polymer for matrix of a rubber composition and the low-molecular weight polymer. Specifically, a method for manufacturing a modified polymer, including continuously supplying a raw material monomer containing at least conjugated diene compound, a polymerization initiator containing lithium, 1,2-butadiene and a modification agent into a flow-through reactor, causing the raw material monomer to be continuously polymerized to generate polymer and also causing a portion of the polymer thus generated to be modified with the modification agent, is characterized in that: the polymerization and the modification are carried out at temperature equal to 110°C or higher; and a mole ratio (1,2-Bd/Li) of the 1,2-butadiene (1,2-Bd) with respect to lithium (Li) of the polymerization initiator containing lithium is set to be 0.37 or less.

## Description

### TECHNICAL FIELD

The present invention relates to a method for manufacturing a modified polymer, a modified polymer, a rubber composition and a tire.

### BACKGROUND ART

There has been conventionally used in a rubber composition an oil-extended rubber which is obtained by oil-extending a raw material rubber with an extender oil. However, in a case where such an oil-extended rubber is used in a rubber composition, the extender oil in the oil-extended rubber fails to be structurally incorporated into the raw material rubber because the extender oil is not involved with crosslinking, thereby causing a problem in that hysteresis loss and thus heat generation of the rubber composition increases due to the presence of the free extender oil therein.

In this connection, there has been developed an alternative extended rubber which is obtained by extending a raw material rubber with a low-molecular weight diene-based polymer (which polymer will be referred to as a "low-molecular weight polymer" hereinafter) instead of an extender oil. In this case, the low-molecular weight polymer is involved with crosslinking and structurally incorporated into the raw material rubber, whereby a rubber composition using the alternative extended rubber can significantly decrease hysteresis loss thereof and achieve satisfactorily low-heat generation and high wear resistance of the rubber composition in a compatible manner.

Further, there has also been developed a technique of using a modified diene-based polymer as a matrix of a rubber composition in order to further decrease hysteresis loss of the rubber composition by a decrease in loss tangent (tanδ) thereof, while employing a low-molecular weight polymer described above as a rubber extender (PTL 1 mentioned below). Such a modified diene-based polymer for a matrix of a rubber composition (which polymer will be referred to as a "modified polymer for matrix" hereinafter) exhibits high affinity with fillers generally blended with the rubber composition. Use of a modified polymer for matrix in a rubber composition therefore improves dispersibility of fillers, thereby further decreasing hysteresis loss of the rubber composition.

### CITATION LIST

### Patent Literature

PTL 1: JP 2006-241358 A

### SUMMARY

### (Technical Problem)

However, conventionally, in a case where the modified polymer for matrix and the low-molecular weight polymer described above are used in a robber composition, there arises a problem in that a production rate of a target polymer in a synthesis facility slows down because it is necessary in the manufacturing process to first prepare each of the modified polymer for matrix and the low-molecular weight polymer separately and then blend them.

Further, in a case where copolymer of a conjugated diene compound and an aromatic vinyl compound is used for each of the modified polymer for matrix and the low-molecular weight polymer, the microstructures (contents of the aromatic vinyl compound in particular) of the modified polymer for matrix and the low-molecular weight polymer must be alike in order to stably ensure good compatibility between the modified polymer for matrix and the low-molecular weight polymer. However, when the modified polymer for matrix and the low-molecular weight polymer are synthesized separately, conversion rates of the aromatic vinyl compound may differ between the synthesis of the former and the synthesis of the latter, which makes the microstructures of the modified polymer for matrix and the low-molecular weight polymer different from each other and possibly deteriorate compatibility between the modified polymer for matrix and the low-molecular weight polymer.

In view of this, an object of the present disclosure is to provide a method for manufacturing a modified polymer, which method can solve the aforementioned prior art problems and obtain a modified polymer equivalent to a blend of the modified polymer for matrix and the low-molecular weight polymer described above at a high production rate.

Further, another object of the present disclosure is to provide: a modified polymer manufactured by the aforementioned method, which polymer can be used in a rubber composition so that low-heat generation property and wear resistance of the rubber composition improve; a rubber composition containing the modified polymer and being excellent in low-heat generation property and wear resistance; and a tire using the rubber composition and being excellent in low-fuel consumption property and wear resistance.

### (Solution to Problem)

Primary features of the present disclosure for achieving the aforementioned objects are as follows.

A method for manufacturing a modified polymer of the present disclosure, comprises continuously supplying a raw material monomer containing at least conjugated diene compound, a polymerization initiator containing lithium, 1,2-butadiene and a modification agent into a flow-through reactor, causing the raw material monomer to be continuously polymerized to generate polymer and also causing a portion of the polymer thus generated to be modified with the modification agent, wherein:
the polymerization and the modification are carried out at temperature equal to 110°C or higher; and
a mole ratio (1,2-Bd/Li) of the 1,2-butadiene (1,2-Bd) with respect to lithium (Li) of the polymerization initiator containing lithium is set to be 0.37 or less.

The modified polymer manufactured by the method of the present disclosure has a wide range of molecular-weight distribution in which a high molecular-weight component exhibits a high modification rate and a low molecular-weight component exhibits a low modification rate, thereby being equivalent to the aforementioned blend of the modified polymer for matrix and the low-molecular weight polymer of the prior art. Further, the method for manufacturing the modified polymer of the present disclosure can achieve a high rate of productivity because it can manufacture the modified polymer equivalent to the prior art blend by the same (one) process.

In a preferable example of the method for manufacturing a modified polymer of the present disclosure, the modification agent contains at least one of nitrogen atom and silicon atom. In this case, it is possible to manufacture a modified polymer having high affinity with fillers such as carbon black and silica.

In another preferable example of the method for manufacturing a modified polymer of the present disclosure, the raw material monomer further contains an aromatic vinyl compound. The method for manufacturing a modified polymer of the present disclosure manufactures a low molecular-weight component and a high molecular-weight component at the same time or in the same process, whereby, when the raw material monomer contains an aromatic vinyl compound, the low molecular-weight component and the high molecular-weight component exhibit relatively small difference in the aromatic vinyl compound contents thereof and thus high compatibility therebetween. Moreover, it is possible to manufacture a modified polymer suitable for a tread or the like of a tire in this case because the raw material monomer contains an aromatic vinyl compound.

A modified polymer of the present disclosure is characterized in that it is manufactured by the aforementioned method for manufacturing a modified polymer. The modified polymer of the present disclosure is equivalent to the aforementioned blend of the modified polymer for matrix and the low-molecular weight polymer of the prior art, as described above, whereby it is possible to eliminate a process of extending a modified polymer for matrix of a rubber composition by a low molecular-weight polymer and/or a process of separately synthesizing a modified polymer for matrix and a low-molecular weight polymer and then blending them.

It is preferable that the modified polymer of the present disclosure has the average modification rate of 60% or higher, a modification rate of 90% or higher at the molecular weight of 600,000, and a modification rate of 40% or less at the molecular weight of 80,000. In this case, use of the modified polymer in a rubber composition can realize satisfactory low-heat generation property and high wear resistance each equivalent to the rubber composition disclosed in PTL 1.

A rubber composition of the present disclosure is characterized in that it contains the modified polymer described above. The rubber composition of the present disclosure, containing the aforementioned modified polymer and thus exhibiting small hysteresis loss (tanδ), has satisfactory low-heat generation property and high wear resistance.

A tire of the present disclosure is characterized in that it uses the rubber composition described above. The tire of the present disclosure, using the aforementioned rubber composition exhibiting small hysteresis loss (tanδ), has satisfactory low-fuel consumption property and high wear resistance.

### (Advantageous Effect)

According to the present disclosure, it is possible to provide: a modified polymer which is equivalent to the prior art blend of a modified polymer for matrix of a rubber composition and the low-molecular weight polymer and capable of improving low-heat generation property and wear resistance of the rubber composition when used in the rubber composition; and a method for manufacturing a modified polymer, which method can manufacture the modified polymer at high productivity.

Further, according to the present disclosure, it is possible to provide: a rubber composition containing the modified polymer and being excellent in low-heat generation property and wear resistance; and a tire using the rubber composition and being excellent in low-fuel consumption property and wear resistance.

### DETAILED DESCRIPTION

### < Method for manufacturing modified polymer >

A method for manufacturing a modified polymer of the present disclosure will be described in detail hereinafter by an embodiment thereof.

The method for manufacturing a modified polymer of the present disclosure is characterized in that it includes continuously supplying a raw material monomer containing at least conjugated diene compound, a polymerization initiator containing lithium, 1,2-butadiene and a modification agent into a flow-through reactor, causing the raw material monomer to be continuously polymerized to generate polymer and also causing a portion of the polymer thus generated to be modified with the modification agent, wherein, when the modified polymer is manufactured: the polymerization and the modification described above are carried out at temperature equal to 110°C or higher; and a mole ratio (1,2-Bd/Li) of the 1,2-butadiene (1,2-Bd) with respect to lithium (Li) of the polymerization initiator containing lithium is set to be 0.37 or less.

In general, in a case where a batch-type reactor is used for generating living polymer by living anion polymerization (batch-type polymerization) and modifying the living polymer thus generated, with a modification agent, in one batch, the terminal carbanions (active sites) of the living polymer are reacted with the modification agent homogeneously, whereby it is possible to synthesize polymer having homogeneously modified terminals and thus exhibiting a high modification rate.

In contrast, in a case of continuous polymerization of monomer by using a flow-through reactor, side reactions such as chain transfer and reaction interruption at the terminal carbanions (active sites) tend to occur because of the high polymerization temperature, stirring like back mixing, etc. inside the reactor. As a result, homogeneously modified polymer cannot be obtained but instead a modified polymer having uneven distributions of molecular weight and modification rate (i.e. at least a portion of the polymer exhibits a low modification rate) is obtained in the continuous polymerization. In view of this, continuous polymerization is generally carried out under low polymerization temperature condition lower than 100°C, to suppress side reactions, increase the modification rate and modify the polymer as homogeneously as possible.

However, the method for manufacturing a modified polymer of the present disclosure successfully aims at manufacturing a modified polymer having an uneven distribution of modification rate in which a high molecular-weight component reliably has a high modification rate, by using a flow-through reactor for continuous polymerization of monomers and keeping the temperature during the polymerization and the modification at 110°C or higher, while setting a mole ratio of the 1,2-butadiene as a chain transfer agent with respect to lithium of the polymerization initiator containing lithium to be 0.37 or less.

The modified polymer manufactured by the method of the present disclosure has a modification rate distribution in which high modification rates are biased toward the high molecular-weight side, i.e. a high molecular-weight component has a high modification rate and a low molecular-weight component has a very low modification rate. Accordingly, the modified polymer of the present disclosure has a composition similar to the prior art blend of a modified polymer for matrix of a rubber composition and an unmodified low-molecular weight polymer.

Therefore, use of the modified polymer manufactured by the method of the present disclosure in a rubber composition in place of the extended rubber obtained by extending a modified polymer for matrix with a low-molecular weight polymer described above improves low-heat generation property and wear resistance of a rubber composition in a highly balanced manner. Further, according to the method of the present disclosure, a component corresponding to the modified polymer for matrix and a component corresponding to the low-molecular weight polymer of a rubber composition can be manufactured at the same time, whereby the production rate in a polymer synthesis facility enhances and economy improves in total.

Type of the flow-through reactor for use in the method for manufacturing a modified polymer of the present disclosure is not particularly restricted as long as the reactor can continuously supply the respective raw materials and discharge the products and any conventionally known flow-through reactor can be employed. The method for manufacturing a modified polymer of the present disclosure, using a flow-through reactor, can cause the raw material monomer to be continuously polymerized to continuously generate polymer. The flow-through reactor, which supplies the modification agent, as well, can also continuously carry out a modification reaction of the polymer thus generated.

The raw material monomer for use in the method for manufacturing a modified polymer of the present disclosure contains at least a conjugated diene compound and may further contain an aromatic vinyl compound.

Examples of the conjugated diene compound include 1,3-butadiene, isoprene, 1,3-pentadiene, 2,3-dimethylbutadiene, 2-phenyl-1,3-butadiene, 1,3-hexadiene, and the like. Examples of the aromatic vinyl compound include styrene, α-methylstyrene, 1-vinylnaphthalene, 3-vinyltoluene, ethylvinylbenzene, divinylbenzene, 4-cyclohexylstyrene, 2,4,6-trimethylstyrene, and the like.

When the conjugated diene compound and the aromatic vinyl compound are used in combination as the raw material monomer, the proportion of the aromatic vinyl compound in the raw material monomer can be appropriately selected in accordance with the target content of the aromatic vinyl compound in the resulting modified polymer.

The polymerization initiator for use in the method for manufacturing a modified polymer of the present disclosure is a polymerization initiator containing lithium. This polymerization initiator containing lithium can initiate anion polymerization of the raw material monomer described above. The polymerization initiator containing lithium is preferably used by an amount of 0.2 mmol to 20 mmol per 100 g of the raw material monomer.

Examples of the polymerization initiator containing lithium include hydrocarbyl lithium and a lithium amide compound. Hydrocarbyl lithium is preferable among these examples. In a case where a lithium amide compound is used as the polymerization initiator containing lithium, a resulting low molecular-weight component will be a modified polymer because a nitrogen-containing functional group is added to the polymerization initiating sites thereof.

Examples of the hydrocarbyl lithium include ethyllithium, n-propyllithium, isopropyllithium, n-butyllithium, sec-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, a product obtained by a reaction of diisopropenyl benzene and butyllithium, and the like.

Example of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dipropylamide, lithium dibutylamide, lithium dihexylamide, lithium diheptylamide, lithium dioctylamide, lithium bis(2-ethylhexyl)amide, lithium didecylamide, lithium N-methylpiperazide, lithium ethylpropylamide, lithium ethylbutylamide, lithium methylbutylamide, lithium ethylbenzylamide, lithium methylphenethylamide, and the like.

Use of a lithium amide compound represented by formula: Li-AM (in the formula, "AM" represents a substituted amino group represented by formula (I) or a cyclic amino group represented by formula (II) shown below) as the aforementioned lithium amide compound makes it possible to obtain a modified polymer having at least one nitrogen-containing functional group introduced thereto, the at least one nitrogen-containing functional group being selected from the group consisting of a substituted amino group represented by the formula (I) and a cyclic amino group represented by the formula (II). 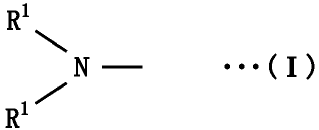 (In formula (I), R¹s each independently represent C₁₋₁₂ alkyl group, cycloalkyl group or aralkyl group.) 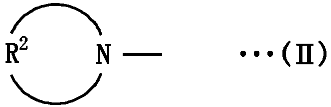 (In formula (II), R² represents alkylene, substituted alkylene, oxyalkylene or N-alkylamino-alkylene group having a C₃₋₁₆ methylene group.)

In the formula (I), R¹s each independently represent C₁₋₁₂ alkyl group, cycloalkyl group or aralkyl group. Specifically, preferable examples of R¹ include methyl, ethyl, butyl, octyl, cyclohexyl, 3-phenyl-1-propyl, isobutyl group, and the like. R¹s may be of either the same type or different types, respectively.

Further, in the formula (II), R² represents alkylene, substituted alkylene, oxyalkylene or N-alkylamino-alkylene group having a C₃₋₁₆ methylene group. The substituted alkylene group may be any of mono- to octa-substituted alkylene groups and examples of the substitute group thereof include C₁₋₁₂ linear or branched alkyl, cycloalkyl, bicycloalkyl, aryl, and aralkyl groups. Specific examples of R² include trimethylene, tetramethylene, hexmethylene, oxydiethylene, N-alkylazadiethylene, dodecamethylene, hexadecamethylene groups, and the like.

The aforementioned lithium amide compound may be either preliminary prepared from a secondary amine and a lithium compound and then used in a polymerization reaction or generated in a polymerization system.

Examples of the secondary amine include dimethylamine, diethylamine, dibutylamine, dioctylamine, dicylohexylamine, diisobutylamine, and cyclic amines such as azacyclohepatane (i.e. hexamethyleneimine), 2-(2-ethylhexyl)pyrrolidine, 3-(2-propyl)pyrrolidine, 3,5-bis(2-ethylhexyl)piperidine, 4-phenylpiperidine, 7-decyl-1-aza-cyclotridecane, 3,3-dimethyl-1-aza-cyclotetradecane, 4-dodecyl-1-aza-cyclooctane, 4-(2-phenylbutyl)-1-aza-cyclooctane, 3-ethyl-5-cyclohexyl-1-aza-cycloheptane, 4-hexyl-1-aza-cycloheptane, 9-isoamyl-1-aza-cycloheptadecane, 2-methyl-1-aza-cycloheptadece-9-en, 3-isobutyl-1-aza-cyclododecane, 2-methyl-7-tert-butyl-1-aza-cyclododecane, 5-nonyl-1-aza-cyclododecane, 8-(4'-methylphenyl)-5-pentyl-3-aza-bicyclo[5.4.0]undecane, 1-butyl-6-aza-bicyclo[3.2.1]octane, 8-ethyl-3-aza-bicyclo[3.2.1]octane, 1-propyl-3-aza-bicyclo[3.2.2]nonane, 3-(tert-butyl)-7-aza-bicyclo[4.3.0]nonane, 1,5,5-trimethyl-3-aza-bicyclo[4.4.0]decane, and the like. Examples of the lithium compound which can be used include hydrocarbyl lithium, as described above.

The method for manufacturing a modified polymer of the present disclosure uses 1,2-butadiene as a chain transfer agent. The 1,2-butadiene has an effect of transferring active sites (terminal carbanions and the like) of living polymer to a different sites.

An amount of 1,2-butadiene for use is selected such that a mole ratio (1,2-Bd/Li) of the 1,2-butadiene (1,2-Bd) with respect to lithium (Li) of the polymerization initiator containing lithium is 0.37 or less, preferably in the range of 0.10 to 0.35. Setting the mole ratio (1,2-Bd/Li) of the 1,2-butadiene (1,2-Bd) with respect to lithium (Li) of the polymerization initiator containing lithium to be 0.37 or less ensures a relatively small number of molecule of the 1,2-butadiene with respect to lithium of the polymerization initiator containing lithium, thereby suppressing inactivation of active sites due to the transfer thereof and thus successfully enhancing the modification rate.

The modification agent for use in the method for manufacturing a modified polymer of the present disclosure is reacted with active sites of the living polymer thus generated, thereby adding functional groups to the polymer and generating a modified polymer. A modification agent containing at least one of nitrogen atom and silicon atom is preferable as the modification agent.

Examples of the modification agent containing nitrogen atom (i.e. a nitrogen-containing compound) include a nitrogen-containing compound having substituted/unsubstituted amino group, amide group, imino group, imidazole group, nitrile group, pyridyl group, or the like. More specifically, examples of the nitrogen-containing compound include N,N'-dimethylimidazolidinone (1,3-dimethyl-2-imidazolidinone), N-methylpyrrolidone, 4-dimethylaminobenzylidene aniline, 4,4'-bis(N,N-dimethylamino)benzophenone, 4,4'-bis(N,N-diethylamino)benzophenone, 4-(N,N-dimethylamino)benzophenone, 4-(N,N-diethylamino)benzophenone, [4-(N,N-dimethylamino)phenyl]methylethylketone, 4,4'-bis(1-hexamethyleneiminomethyl)benzophenone, 4,4'-bis(1-pyrrolidinomethyl)benzophenone, 4-(1-hexamethyleneiminomethyl)benzophenone, 4-(1-pyrrolidinomethyl)benzophenone, [4-(1-hexamethyleneimino)phenyl]methylethylketone, and the like.

The modification agent containing silicon atom (i.e. a silicon-containing compound) is preferably a hydrocarbyloxysilane compound and more preferably a hydrocarbyloxysilane compound represented by the formula (III) or the formula (IV) shown below. 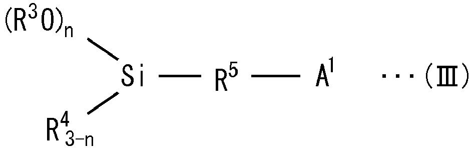 [In the formula (III), A¹ represents a monovalent group having at least one functional group selected from the group consisting of (thio)epoxy, (thio)isocyanate, (thio)ketone, (thio)aldehyde, imine, amide, isocyanuric acid triester, (thio)carboxylic acid hydrocarbylester, a metal salt of (thio)carboxylic acid, carboxylic anhydride, carboxylic acid halide, and carbonic acid dihydrocarbylester; R³ and R⁴ each independently represent a C₁₋₂₀ monovalent aliphatic hydrocarbon group or a C₆₋₁₈ monovalent aromatic hydrocarbon group; R⁵ represents a single bond or a C₁₋₂₀ divalent inactive hydrocarbon group; n represents an integer in the range of 1 to 3; when a plurality of R³Os exist, the R³Os may be of either the same type or different types; when a plurality of R⁴s exist, the R⁴s may be of either the same type or different types; and the molecule contains no active proton and no onium salt therein.]

R⁶ₚ-Si-(OR⁷)₄₋ₚ ··· (IV)

[In the formula (IV), R⁶ and R⁷ each independently represent a C₁₋₂₀ monovalent aliphatic hydrocarbon group or a C₆₋₁₈ monovalent aromatic hydrocarbon group; p represents an integer in the range of 0 to 2; when a plurality of R⁶s exist, the R⁶s may be of either the same type or different types; when a plurality of OR⁷s exist, the OR⁷s may be of either the same type or different types; and the molecule contains no active proton and no onium salt therein.]

In the present disclosure, "(thio)epoxy" represents epoxy and thioepoxy, "(thio)isocyanate" represents isocyanate and thioisocyanate, "(thio)ketone" represents ketone and thioketone, "(thio)aldehyde" represents aldehyde and thioaldehyde, "(thio)carboxylic acid hydrocarbylester" represents carboxylic acid hydrocarbylester and thiocarboxylic acid hydrocarbylester, "a metal salt of (thio)carboxylic acid" represents a metal salt of carboxylic acid and a metal salt of thiocarboxylic acid.

In respect of the functional group in A¹ of the formula (III), "imine" includes ketimine, aldimine and amidine, "(thio)carboxylic acid hydrocarbylester" includes unsaturated carboxylic acid ester such as acrylate and methacrylate. Examples of the metal of "a metal salt of (thio)carboxylic acid" include alkali metal, alkali earth metal, Al, Sn, Zn and the like. Further, "n", which is an integer in the range of 1 to 3, is preferably 3.

Examples of R³ and R⁴ include C₁₋₂₀ alkyl group, C₂₋₁₈ alkenyl group, C₆₋₁₈ aryl group, C₇₋₁₈ aralkyl group and the like. The alkyl group and the alkenyl group may be linear, branched or cyclic and examples thereof include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl groups and the like. The aryl group may have a substituent group like a lower alkyl group on the aromatic ring thereof and examples of such an aryl group include phenyl, tolyl, xylyl, naphthyl groups and the like. The aralkyl group may have a substituent group like a lower alkyl group on the aromatic ring thereof and examples of such an aralkyl group include benzyl, phenethyl, naphthylmethyl groups and the like.

The C₁₋₂₀ divalent inactive hydrocarbon group in R⁵ preferably a C₁₋₂₀ alkylene group. The alkylene group may be linear, branched or cyclic but preferably linear in particular. Examples of the linear alkylene group include methylene, ethylene, trimethylene, tetramethylene, pentamethylene, hexamethylene, octamethylene, decamethylene, dodecamethylene groups and the like.

In respect of the hydrocarbyloxysilane compound represented by the formula (III), examples of the hydrocarbyloxysilane compound containing (thio)epoxy group include 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane, those obtained by substituting the epoxy group in the aforementioned compounds with thioepoxy group, and the like. 3-glycidoxypropyltrimethoxysilane and 3-glycidoxypropyltriethoxysilane are particularly preferable among these examples.

Examples of the hydrocarbyloxysilane compound containing imine group include N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, trimethoxysilyl compounds, methyldiethoxysilyl compounds, ethyldiethoxysilyl compounds, methyldimethoxysilyl compounds, ethyldimethoxysilyl compounds corresponding to the aforementioned triethoxysilyl compounds, and the like. N-(1-methylpropylidene)-3-(triethoxysilyl)-1-propaneamine and N-(1,3-dimethylbutylidene)-3-(triethoxysilyl)-1-propaneamine are particularly preferable among these examples.

Examples of the compound containing imine (amidine) group include 1-[3-(triethoxysilyl)propyl]-4,5-dihydroimidazole, 1-[3-(trimethoxysilyl)propyl]-4,5-dihydroimidazole, N-(3-triethoxysilylpropyl)-4,5-dihydroimidazole, N-(3-isopropoxysilylpropyl)-4,5-dihydroimidazole, N-(3-methyldiethoxysilylpropyl)-4,5-dihydroimidazole, and the like. N-(3-triethoxysilylpropyl)-4,5-dihydroimidazole is preferable among these examples.

Further, as other hydrocarbyloxysilane compounds, examples of the hydrocarbyloxysilane compound containing carboxylic acid ester group include 3 - methacryloyloxypropyltriethoxysilane, 3-methacryloyloxypropyltrimethoxysilane, 3-methacryloyloxypropylmethyldiethoxysilane, 3-methacryloyloxypropyltriisopropoxysilane, and the like. 3-methacryloyloxypropyltrimethoxysilane is preferable among these examples.

Yet further, examples of the hydrocarbyloxysilane compound containing isocyanate group include 3-isocyanatopropyltrimethoxysilane, 3-isocyanatopropyltriethoxysilane, 3-isocyanatopropylmethyldiethoxysilane, 3-isocyanatopropyltriisopropoxysilane, and the like. 3-isocyanatopropyltriethoxysilane is preferable among these examples. Yet further, examples of the hydrocarbyloxysilane compound containing carboxylic anhydride group include [3-(triethoxysilyl)propyl]succinic anhydride, [3-(trimethoxysilyl)propyl]succinic anhydride, [3-(methyldiethoxysilyl)propyl]succinic anhydride, and the like. [3-(triethoxysilyl)propyl]succinic anhydride is preferable among these examples.

In respect of the formula (IV), the aforementioned descriptions on R³ and R⁴ of the formula (III) are applicable to R⁶ and R⁷ thereof. Examples of the hydrocarbyloxysilane compound represented by the formula (IV) include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, propyltriethoxysilane, butyltrimethoxysilane, phenyltrimethoxysilane, phenyltriethoxysilane, dimethyldimethoxysilane, methylphenyldimethoxysilane, vinyltrimethoxysilane, vinyltriethoxysilane, divinyldimethoxysilane, divinyldiethoxysilane, and the like. Tetraethoxysilane is preferable among these examples.

The modification agent is used preferably by the amount of 0.25 mol to 3.0 mol, more preferably by the amount of 0.5 mol to 1.5 mol, per 1mol of the polymerization initiator containing lithium in use.

The method for manufacturing a modified polymer of the present disclosure is preferably carried out by solution polymerization. A solvent for use in the solution polymerization is preferably a hydrocarbon solvent inactive to a polymerization reaction. Examples of the hydrocarbon solvent inactive to a polymerization reaction include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, ethylbenezene, and the like. These hydrocarbon solvents may be used by either a single type solely or two or more types in combination.

In the case of solution polymerization, concentration of the raw material monomer in the solvent is preferably 5-50 mass % and more preferably 10-30 mass %.

The method for manufacturing a modified polymer of the present disclosure may be carried out under the presence of a randomizer. A randomizer can control a microstructure of a conjugated diene compound. For example, a randomizer has an effect of: controlling a vinyl bond (1,2-bond) content of the butadiene unit of the polymer manufactured by using 1,3 -butadiene as the raw material monomer; randomizing, when copolymer is prepared by using a conjugated diene compound and an aromatic vinyl compound as monomers, the conjugated diene compound unit and the aromatic vinyl compound unit of the copolymer; and the like.

Examples of the randomizer include dimethoxybenzene, tetrahydrofuran, dimethoxyethane, diethyleneglycol dibutyl ether, diethyleneglycol dimethyl ether, 2,2-di(tetrahydrofurayl)propane, triethylamine, pyridine, N-methylmorpholine, N,N,N',N'-tetramethylethylenediamine, 1,2-dipiperidinoethane, potassium t-amylate, potassium t-butoxide, sodium t-amylate, and the like. The randomizer is used preferably by the amount of 0.01 mol to 100 mol per 1mol of the polymerization initiator containing lithium.

According to the method for manufacturing a modified polymer of the present disclosure, a raw material monomer, a polymerization initiator containing lithium, 1,2-butadiene and a modification agent are continuously supplied into the flow-through reactor described above. In the flow-through reactor, the raw material monomer is then polymerized by the polymerization initiator containing lithium to generate living polymers and at the same time active sites are transferred by 1,2-butadiene between the living polymers thus generated.

In this respect, a low molecular-weight living polymer tends to make itself stable by abstracting a proton (H⁺) from a high molecular-weight living polymer. The low molecular-weight polymer thus stabilized neither makes a further growth nor is reacted with the modification agent, whereby it is likely to remain an unmodified, low molecular-weight polymer. On the other hand, the high molecular-weight living polymer, from which protons (H⁺) have been abstracted, has a plurality of active sites, makes further growth and increases the molecular weight thereof. Such a high molecular-weight living polymer is reacted with the modification agent, whereby a modified polymer is generated. As a result, a modified polymer having a functional group derived from the modification agent tends to have a high molecular weight. Therefore, according to the method for manufacturing a modified polymer of the present disclosure, it is possible to manufacture an unmodified, low molecular-weight polymer and a modified, high molecular-weight polymer having a functional group derived from the modification agent (they correspond to the prior art blend of a modified polymer for matrix of a rubber composition and a low-molecular weight polymer) at the same time.

According to the method for manufacturing a modified polymer of the present disclosure, the polymerization and the modification described above are carried out at temperature equal to 110°C or higher, preferably at temperature in the range of 115°C to 130°C. Setting the temperature in the polymerization of the raw material monomer and the modification of generated polymer at 110°C or higher facilitates chain transfer of active sites of the generated polymer during the modification, so that a low-molecular weight component made inactive by the chain transfer is likely to remain unmodified and a high molecular-weight component having a plurality of active sites as a result of the chain transfer is likely to be modified. It is therefore possible to increase discrepancy between a higher modification rate and a lower modification rate, which discrepancy is associated with the molecular weight, whereby a modified polymer having an uneven distribution of modification rate can be synthesized.

### < Modified polymer >

The modified polymer of the present disclosure is characterized in that it is manufactured by the aforementioned method for manufacturing a modified polymer. The modified polymer of the present disclosure is equivalent to the aforementioned prior art blend of a modified polymer for matrix and a low-molecular weight polymer, whereby it is possible in the former to eliminate a process of extending a modified polymer for matrix of a rubber composition by a low molecular-weight polymer and/or a process of separately synthesizing a modified polymer for matrix and a low-molecular weight polymer and then blending them.

The modified polymer of the present disclosure has: the average modification rate which is preferably 60% or higher, more preferably in the range of 70% to95 %; a modification rate of 90% or higher at the molecular weight of 600,000; and a modification rate of 40% or less at the molecular weight of 80,000.

Setting the average modification rate of the modified polymer to be 60% or higher increases, when the modified polymer is used in a rubber composition, affinity between the modified polymer and fillers, thereby improving low-heat generation property and wear resistance of the rubber composition.

Further, setting a modification rate at the molecular weight of 600,000 to be 90% or higher and a modification rate at the molecular weight of 80,000 to be 40% or less renders the modified polymer of the present disclosure substantially equal to the blend of an unmodified, low molecular-weight polymer and a modified polymer for matrix as disclosed in PTL 1. Use of the modified polymer in a rubber composition therefore can realize satisfactory low-heat generation property and high wear resistance each equivalent to the rubber composition disclosed in PTL 1.

The modified polymer of the present disclosure preferably has the number average molecular weight (Mn) of 70,000 to 210,000, the weight average molecular weight (Mw) of 140,000 to 500,000, and the peak molecular weight (Mp) of 150,000 to 400,000, each calculated in terms of polystyrene, although type of the modified polymer of the present disclosure is not particularly restricted thereto. The modified polymer satisfying the aforementioned ranges of the molecular weight has an advantage that it achieves low hysteresis loss property and high wear resistance in an excellently balanced manner.

### < Rubber composition >

The rubber composition of the present disclosure is characterized in that it includes the modified polymer described above. The rubber composition of the present disclosure, containing the modified polymer therein, is excellent in low-heat generation property and wear resistance. The modified polymer works as a softening agent and a rubber component for matrix in the rubber composition of the present disclosure. The rubber composition of the present disclosure may contain a rubber component other than the aforementioned modified polymer.

In addition to the aforementioned modified polymer, fillers such as carbon black, silica and the like, antioxidant, silane coupling agent, vulcanization accelerator, vulcanization accelerator auxiliary, vulcanizing agent, etc. may also be appropriately selected and blended with the rubber composition of the present disclosure unless addition of these optional additives adversely affects the object of the present disclosure. Commercially available products can be suitably used as the optional additives described above.

The rubber composition of the present disclosure can be manufactured by subjecting a blend of the aforementioned modified polymer and respective additives appropriately selected according to necessity, to mixing and kneading, warming, extrusion, and the like.

### < Tire >

The tire of the present disclosure is characterized in that it uses the rubber composition described above. The tire of the present disclosure, using the aforementioned rubber composition, has small rolling resistance and is excellent in wear resistance. The rubber composition is applicable to tire portions such as a tread, a sidewall, a case member, and the like. The rubber composition is preferably applied to a tread of a tire in particular.

The tire of the present disclosure may be manufactured by either i) molding the rubber composition in an unvulcanized state and subjecting a resulting green tire to vulcanization or ii) subjecting the rubber composition to a preliminary vulcanization process, molding half-crosslinked (half-vulcanized) rubber thus obtained by the preliminary vulcanization process, and subjecting a resulting tire to a main vulcanization process, depending on the type of application of the tire. The tire of the present disclosure is preferably a pneumatic tire and examples of gas with which the tire is to be inflated include inert gas such as nitrogen, argon, helium or the like, as well as ambient air and air of which partial pressure has been adjusted.

### < Other applications >

The rubber composition of the present disclosure or a crosslinked rubber composition obtained by crosslinking the rubber composition of the present disclosure is applicable to, other than a tire, other rubber products such as vibration damper rubber, base-isolation rubber, belt (conveyer belt), rubber crawler, various types of hoses, Moran, and the like.

### EXAMPLES

The present disclosure will be described further in detail by Examples hereinafter. The present disclosure is not limited by any means to these Examples. The respective measurements and evaluations were carried out by the methods described below.

### (1) Molecular weight

The number average molecular weight (Mn), the weight average molecular weight (Mw) and the peak molecular weight (Mp) in terms of polystyrene of each sample polymer were obtained, respectively, by gel permeation chromatography [GPC: "HLC-8020" manufactured by TOSOH CORPORATION, Column: "GMH-XL" (two in series) manufactured by TOSOH CORPORATION, Detector: a differential refractometer (RI)] with monodispersed polystyrene as the reference.

### (2) Microstructure and bonded styrene content

Butadiene content (mass %), bonded vinyl content (mass %) of the butadiene portion, and styrene content (mass %) of the sample polymer were obtained, respectively, based on integral ratios of ¹H-NMR spectrum.

### (3) Modification rate

### (i) Method for measuring modification rate of batch-polymerized product

A consumption rate of the modification agent was calculated by measuring by gas chromatography (GC) the content of the modification agent remaining unreacted. The value of the consumption rate was regarded as the modification rate.

### (ii) Method for measuring modification rate of continuously-polymerized product

Polymer cement was collected from a reactor immediately before charging the modification agent to the reactor and the polymer cement thus collected was charged in a pressure-resistant bottle. A large amount of 4,4'-bis(diethylamino)benzophenone (DEAB) was added to the bottle and the mixture was stirred for 30 minute in a thermostatic bath in which the temperature was kept at 50°C.

2,6-di-tert-butyl-p-cresol (BHT) was added to a resulting reaction product and then the product was dried by a heating roll of which temperature was adjusted at 110°C.

The continuously-polymerized sample, which had been modified by DEAB, was subjected to measurement by GPC for measuring the molecular weight thereof and analysis by an UV detector for determining absorption intensity at 280 nm.

The modification rate at a specific molecular weight, of the continuously-polymerized sample, was calculated by comparing the intensity thereof with the intensity of the batch-polymerized sample having a molecular weight equal to the specific molecular weight, modified by DEAB and whose modification rate is known. The average modification rate was calculated as the average of modification rates in the range of 80,000 to 600,000.

### (4) Productivity

For each of Examples and Comparative Examples, time required for the conversion rate of the raw material monomer to reach 100% was counted.

In a case of the continuous polymerization using a flow-through reactor, the aforementioned "time" means time during which the raw material monomer was required to stay inside the reactor.

In each of Examples and Comparative Examples shown in Tables 1 and 2, productivity is expressed by an index which is a converted value of the inverse number of the aforementioned "time" relative to the inverse number of the aforementioned "time" of Comparative Example 3 being "100". Similarly, in each of Examples and Comparative Examples shown in Tables 3 and 4, productivity is expressed by an index which is a converted value of the inverse number of the aforementioned "time" relative to the inverse number of the aforementioned "time" of Comparative Example 9 being "100". The larger index value represents the shorter time required for the conversion rate of the raw material monomer to reach 100%, i.e. the higher productivity.

### (5) Heat generation property (tanδ)

The rubber composition thus obtained was subjected to vulcanization at 160°C for 20 minutes and then measurement of tanδ by a dynamic viscoelasticity analyzer (manufactured by Rheometric Scientific Inc.) under the conditions of temperature: 60°C, dynamic strain: 5%, frequency: 15 Hz. In each of Examples and Comparative Examples shown in Table 5 tanδ is expressed by an index relative to the tanδ value of Comparative Example 16 being "100" and in each of Examples and Comparative Examples shown in Table 6 tanδ is expressed by an index relative to the tanδ value of Comparative Example 21 being "100" according to the formula shown below. The smaller index value represents the lower heat generation, i.e. smaller hysteresis loss.

Heat generation index = [(tanδ of sample rubber composition)/ (tanδ of rubber composition of Comp. Example 16 or Comp. Example 21)] × 100

### (6) Wear resistance

The rubber composition thus obtained was subjected to vulcanization at 160°C for 20 minutes and then measurement of wear amount according to JIS K 6264-2:2005 by using a Lambourn abrasion tester under the conditions of slip rate: 25 %, temperature: 23°C. Wear resistance is expressed by an index which is a converted value of the inverse number of the wear amount value of the sample rubber composition relative to the inverse number of the wear amount value of Comparative Example 16 being "100" in each of Examples and Comparative Examples shown in Table 5 and similarly wear resistance is expressed by an index which is a converted value of the inverse number of the wear amount value of the sample rubber composition relative to the inverse number of the wear amount value of Comparative Example 21 being "100" in each of Examples and Comparative Examples shown in Table 6, according to the formula shown below. The larger index value represents the smaller wear amount, i.e. higher wear resistance.

Wear resistance index = [(wear amount of rubber composition of Comp. Example 16 or Comp. Example 21)/(wear amount of sample rubber composition)] × 100

### < Example 1 >

Example 1 was carried out by: supplying, to a flow-through reactor (internal volume: 76 L), a hexane solution (20 mass % concentration) containing 35 mass % of styrene monomer and 65 mass % of 1,3-butadiene monomer ("mass %" with respect to the total mass of the monomer) at a rate of 138.47 kg/hour and also 3 mass % of n-butyllithium as a polymerization initiator at a rate of 503.00 g/hour; continuously supplying, from the bottom portion of the reactor, 1,2-butadiene (0.18 equivalent unit with respect to n-butyllithium), 2,2-di(tetrahydrofuranyl)propane (0.50 equivalent unit with respect to n-butyllithium), and N-(1,3-dimethylbutylidene)-3-(triethoxysilyl)-1-propaneamine (0.50 equivalent unit with respect to n-butyllithium) as Modification agent A represented by the chemical formula shown below; carrying out polymerization so that the materials stayed for 20 minutes in the reactor, while maintaining the "2/3 temperature of the reactor" (the temperature measured at a height approximately 2/3 of the side wall measured from the bottom of the reactor) at 122°C; stopping the polymerization reaction by adding isopropanol to the polymer cement thus obtained by the aforementioned reaction; further adding 2,6-di-tert-butyl-p-cresol (BHT) as an antioxidant to the polymer cement, to leave it in a blend tank for approximately 2 hours; then removing the solvent from the polymer cement and drying the product, thereby obtaining Polymer 1.

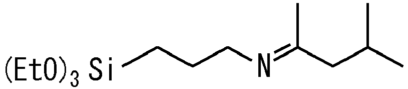

The styrene content of Polymer 1 thus obtained was 35 mass %, the butadiene content with respect to the total mass of Polymer 1 was 65 mass %, and the bonded vinyl content of the butadiene portion was 28 mass %.

### < Example 2, Comparative Examples 1, 2 >

Each of Polymers 2-4 was prepared in a manner similar to that of Example 1, except that the supply ratios of n-butyllithium, 2,2-di(tetrahydrofuranyl)propane, and 1,2-butadiene were changed in the formers as shown in Table 1, to change the polymerization temperature.

**[Table 1]**

| | | Example 1 | Example 2 | Comp. Example 1 | Comp. Example 2 |
|---|---|---|---|---|---|
| Polymer | | Polymer 1 | Polymer 2 | Polymer 3 | Polymer 4 |
| Styrene charging ratio (mass %) | | 35 | 35 | 35 | 35 |
| 1,3-butadiene charging ratio (mass %) | | 65 | 65 | 65 | 65 |
| n-butyllithium (mmol/hour) | | 234 | 234 | 234 | 245 |
| 2,2-di(tetrahydrofuranyl)propane (molar ratio) * | | 0.50 | 0.46 | 0.40 | 0.44 |
| 1,2-butadiene (molar ratio) * | | 0.18 | 0.35 | 0.44 | 0.46 |
| Type of modification agent | | Modification agent A | Modification agent A | Modification agent A | Modification agent A |
| Modification agent (molar ratio) * | | 0.50 | 0.50 | 0.50 | 0.50 |
| Temperature during polymerization and modification (°C) | | 122 | 111 | 94 | 112 |
| Polymer properties | Styrene content (mass %) | 35 | 35 | 36 | 35 |
| | Bonded vinyl content (mass %) | 28 | 27 | 28 | 28 |
| | Mn (×1,000) | 161 | 178 | 201 | 182 |
| | Mw (× 1,000) | 451 | 427 | 402 | 455 |
| | Mp (× 1,000) | 275 | 260 | 268 | 284 |
| | Molecular weight distribution | 2.8 | 2.4 | 2.0 | 2.5 |
| | Average modification rate (%) | 67 | 65 | 69 | 41 |
| | Modification rate (%) at high molecular weight region (600k) | >90 | >90 | 74 | 73 |
| | Modification rate (%) at low molecular weight region (80k) | 28 | 35 | 58 | 30 |
| Productivity of polymer (index) | | 117 | 112 | 107 | 112 |

| | | | | | |
|---|---|---|---|---|---|
| * molar ratio with respect to n-butyllithium | | | | | |

### < Comparative Example 3 >

Comparative Example 3 was carried out by: charging, to a nitrogen-substituted autoclave reactor (a batch-type reactor, internal volume: 5 L), a hexane (2486 g), 2,2-di(tetrahydrofuranyl)propane (0.10 mol/Li), potassium t-amylate (KTA, 0.10 mol/Li), styrene (154 g), 1,3-butadiene (285 g); adjusting the temperature of the mixture in the reactor at 10°C and then adding n-butyllithium (0.587 mmol) to the mixture, to initiate polymerization (the polymerization was carried out under a heat-insulated condition and the maximum temperature reached 85°C); adding 10 g of 1,3-butadiene to the polymer solution when the polymerization conversion rate reached 99% and allowing the polymerization to proceed for 5 more minutes; collecting a small amount of the polymer solution from the reactor for sampling and adding the polymer solution thus collected to 30 g of a cyclohexane solution to which 1 g of methanol had been added; adding N-(1,3-dimethylbutylidene)-3-(triethoxysilyl)-1-propaneamine (0.50 mol/Li) as Modification agent A to the polymer solution, to carry out a modification reaction for 15 minutes; adding 2,6-di-tert-butyl-p-cresol (BHT) to the reaction mixture; then removing the solvent from the reaction mixture by steam stripping and drying the rubber by a heating roll of which temperature was adjusted at 110°C, thereby obtaining Polymer 5.

### < Comparative Examples 4-6 >

Each of Polymers 6-8 was prepared in a manner similar to that of Comparative Example 3, except that the charging ratios of n-butyllithium, 2,2-di(tetrahydrofuranyl)propane, and potassium t-amylate (KTA) were changed in the formers as shown in Table 2. Comparative Example 6 did not use any modification agent.

**[Table 2]**

| | | Comp. Example 3 | Comp. Example 4 | Comp. Example 5 | Comp. Example 6 |
|---|---|---|---|---|---|
| Polymer | | Polymer 5 | Polymer 6 | Polymer 7 | Polymer 8 |
| Styrene charging ratio (mass %) | | 35 | 35 | 35 | 35 |
| 1,3-butadiene charging ratio (mass %) | | 65 | 65 | 65 | 65 |
| n-butyllithium (mmol) | | 0.587 | 0.859 | 1.122 | 2.357 |
| 2,2-di(tetrahydrofuranyl)propane (molar ratio) * | | 0.1 | 0.1 | 0.1 | 0.1 |
| Potassium t-amylate (molar ratio) * | | 0.1 | 0.1 | 0.1 | 0.1 |
| Type of modification agent | | Modification agent A | Modification agent A | Modification agent A | - |
| Modification agent (molar ratio) * | | 0.50 | 0.50 | 0.50 | - |
| Polymer properties | Styrene content (mass %) | 35 | 36 | 37 | 35 |
| | Bonded vinyl content (mass %) | 28 | 26 | 27 | 27 |
| | Mn (×1,000) | 250 | 168 | 112 | 68 |
| | Mw (× 1,000) | 450 | 320 | 190 | 75 |
| | Mp (× 1,000) | 281 | 192 | 147 | 70 |
| | Molecular weight distribution | 1.8 | 1.9 | 1.7 | 1.1 |
| | Average modification rate (%) | 81 | 83 | 82 | 0 |
| | Modification rate (%) at high molecular weight region (600k) | - | - | - | - |
| | Modification rate (%) at low molecular weight region (80k) | - | - | - | - |
| Productivity of polymer (index) | | 100 | 100 | 100 | 102 |

| | | | | | |
|---|---|---|---|---|---|
| * molar ratio with respect to n-butyllithium | | | | | |

### < Example 3 >

Polymer 9 was prepared in a manner similar to that of Example 1, except that N-(1,3-dimethylbutylidene)-3-(triethoxysilyl)-1-propaneamine (Modification agent A) of the latter was replaced with N-(3-triethoxysilylpropyl)-4,5-dihydroimidazole (Modification B represented by the chemical formula shown below) in the former.

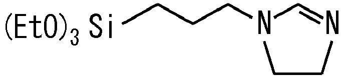

### < Example 4, Comparative Examples 7, 8 >

Each of Polymers 10-12 was prepared in a manner similar to that of Example 3, except that the supply ratios of n-butyllithium, 2,2-di(tetrahydrofuranyl)propane, and 1,2-butadiene were changed in the formers as shown in Table 3, to change the polymerization temperature.

**[Table 3]**

| | | Example 3 | Example 4 | Comp. Example 7 | Comp. Example 8 |
|---|---|---|---|---|---|
| Polymer | | Polymer 9 | Polymer 10 | Polymer 11 | Polymer 12 |
| Styrene charging ratio (mass %) | | 35 | 35 | 35 | 35 |
| 1,3-butadiene charging ratio (mass %) | | 65 | 65 | 65 | 65 |
| n-butyllithium (mmol/hour) | | 234 | 234 | 234 | 245 |
| 2,2-di(tetrahydrofuranyl)propane (molar ratio) * | | 0.50 | 0.46 | 0.40 | 0.44 |
| 1,2-butadiene (molar ratio) * | | 0.18 | 0.35 | 0.44 | 0.46 |
| Type of modification agent | | Modification agent B | Modification agent B | Modification agent B | Modification agent B |
| Modification agent (molar ratio) * | | 0.50 | 0.50 | 0.50 | 0.50 |
| Polymerization Temperature (°C) | | 122 | 111 | 94 | 112 |
| Polymer properties | Styrene content (mass %) | 36 | 37 | 35 | 36 |
| | Bonded vinyl content (mass %) | 27 | 28 | 27 | 28 |
| | Mn (×1,000) | 157 | 164 | 181 | 170 |
| | Mw (×1,000) | 455 | 377 | 344 | 442 |
| | Mp (×1,000) | 268 | 257 | 270 | 265 |
| | Molecular weight distribution | 2.9 | 2.3 | 1.9 | 2.6 |
| | Average modification rate (%) | 71 | 68 | 68 | 39 |
| | Modification rate (%) at high molecular weight region (600k) | >90 | >90 | 75 | 74 |
| | Modification rate (%) at low molecular weight region (80k) | 24 | 36 | 60 | 28 |
| Productivity of polymer (index) | | 117 | 112 | 107 | 112 |

| | | | | | |
|---|---|---|---|---|---|
| * molar ratio with respect to n-butyllithium | | | | | |

### < Comparative Example 9 >

Polymer 13 was prepared in a manner similar to that of Comparative Example 3, except that N-(1,3-dimethylbutylidene)-3-(triethoxysilyl)-1-propaneamine (Modification agent A) of the latter was replaced with N-(3-triethoxysilylpropyl)-4,5-dihydroimidazole (Modification B) in the former.

### < Comparative Examples 10, 11 >

Each of Polymers 14, 15 was prepared in a manner similar to that of Comparative Example 9, except that the charging ratios of n-butyllithium, 2,2-di(tetrahydrofuranyl)propane, and potassium t-amylate (KTA) were changed in the formers as shown in Table 4.

**[Table 4]**

| | | Comp. Example 9 | Comp. Example 10 | Comp. Example 11 |
|---|---|---|---|---|
| Polymer | | Polymer 13 | Polymer 14 | Polymer 15 |
| Styrene charging ratio (mass %) | | 35 | 35 | 35 |
| 1,3-butadiene charging ratio (mass %) | | 65 | 65 | 65 |
| n-butyllithium (mmol) | | 0.587 | 0.859 | 1.122 |
| 2,2-di(tetrahydrofuranyl)propane (molar ratio) * | | 0.1 | 0.1 | 0.1 |
| Potassium t-amylate (molar ratio) * | | 0.1 | 0.1 | 0.1 |
| Type of modification agent | | Modification agent B | Modification agent B | Modification agent B |
| Modification agent (molar ratio) * | | 0.50 | 0.50 | 0.50 |
| Polymer properties | Styrene content (mass %) | 36 | 35 | 35 |
| | Bonded vinyl content (mass %) | 27 | 28 | 25 |
| | Mn (×1,000) | 253 | 189 | 128 |
| | Mw (×1,000) | 480 | 340 | 205 |
| | Mp (×1,000) | 271 | 202 | 147 |
| | Molecular weight distribution | 1.9 | 1.8 | 1.6 |
| | Average modification rate (%) | 77 | 79 | 84 |
| | Modification rate (%) at high molecular weight region (600k) | - | - | - |
| | Modification rate (%) at low molecular weight region (80k) | - | - | - |
| Productivity of polymer (index) | | 100 | 100 | 100 |

| | | | | |
|---|---|---|---|---|
| * molar ratio with respect to n-butyllithium | | | | |

It is understood from the results of Tables 1 to 4 that the method for manufacturing a modified polymer of the present disclosure achieves high productivity.

### < Preparation of rubber composition and evaluation thereof >

Test rubber compositions were manufactured by carrying out two stages of mixing and kneading, i.e. the first stage mixing and kneading and the subsequent final stage of mixing and kneading, using a conventional Banbury mixer according to the blending prescriptions shown in Tables 5 and 6. The maximum temperature of the test rubber compositions was set at 160°C at the first stage mixing and kneading and at 105°C at the final stage mixing and kneading, respectively.

Heat generation property (tanδ) and wear resistance of the test rubber compositions thus obtained were evaluated by the methods described above, respectively. The results are shown in Tables 5 and 6.

**[Table 5]**

| | | | | Example 5 | Example 6 | Comp. Example 12 | Comp. Example 13 | Comp. Example 14 | Comp. Example 15 | Comp. Example 16 |
|---|---|---|---|---|---|---|---|---|---|---|
| | | Polymer 1 | | 120 | - | - | - | - | - | - |
| | | Polymer 2 | | - | 120 | - | - | - | - | - |
| | | Polymer 3 | | - | - | 120 | - | - | - | - |
| | | Polymer 4 | | - | - | - | 120 | - | - | - |
| | | Polymer 5 | | - | - | - | - | 30 | - | - |
| | | Polymer 6 | | - | - | - | - | 40 | 100 | 100 |
| | First stage mixing and kneading | Polymer 7 | | - | - | - | - | 30 | - | - |
| Blending details | | Polymer 8 | Parts by mass | - | - | - | - | 20 | 20 | - |
| | | Carbon black N220 *1 | | 10.0 | 10.0 | 10.0 | 10.0 | 10.0 | 10.0 | 10.0 |
| | | Silica *2 | | 65.0 | 65.0 | 65.0 | 65.0 | 65.0 | 65.0 | 65.0 |
| | | Silane coupling agent *3 | | 5.0 | 5.0 | 5.0 | 5.0 | 5.0 | 5.0 | 5.0 |
| | | Oil | | - | - | - | - | - | - | 20.0 |
| | | Stearic acid | | 2.0 | 2.0 | 2.0 | 2.0 | 2.0 | 2.0 | 2.0 |
| | | Antioxidant 6PPD *4 | | 1.0 | 1.0 | 1.0 | 1.0 | 1.0 | 1.0 | 1.0 |
| | Final stage mixing and kneading | Zinc white | | 2.5 | 2.5 | 2.5 | 2.5 | 2.5 | 2.5 | 2.5 |
| | | Vulcanization accelerator DPG *5 | | 0.6 | 0.6 | 0.6 | 0.6 | 0.6 | 0.6 | 0.6 |
| | | Vulcanization accelerator MBTS *6 | | 1.0 | 1.0 | 1.0 | 1.0 | 1.0 | 1.0 | 1.0 |
| | | Vulcanization accelerator TBBD *7 | | 0.6 | 0.6 | 0.6 | 0.6 | 0.6 | 0.6 | 0.6 |
| | | Sulfur | | 1.5 | 1.5 | 1.5 | 1.5 | 1.5 | 1.5 | 1.5 |
| Evaluation | tanδ | | Index | 93 | 94 | 95 | 102 | 95 | 95 | 100 |
| | Wear resistance | | Index | 120 | 118 | 113 | 115 | 117 | 112 | 100 |

**[Table 6]**

| | | | | Example 7 | Example 8 | Comp. Example 17 | Comp. Example 18 | Comp. Example 19 | Comp. Example 20 | Comp. Example 21 |
|---|---|---|---|---|---|---|---|---|---|---|
| | | Polymer 9 | | 120 | - | - | - | - | - | - |
| | | Polymer 10 | | - | 120 | - | - | - | - | - |
| | | Polymer 11 | | - | - | 120 | - | - | - | - |
| | | Polymer 12 | | - | - | - | 120 | - | - | - |
| | First stage mixing an kneading | Polymer 13 | | - | - | - | - | 30 | - | - |
| | | Polymer 14 | | - | - | - | - | 40 | 100 | 100 |
| | | Polymer 15 | | - | - | - | - | 30 | - | - |
| | | Polymer 8 | | - | - | - | - | 20 | 20 | - |
| | | Carbon black N220 *1 | | 20.0 | 20.0 | 20.0 | 20.0 | 20.0 | 20.0 | 20.0 |
| Blending details | | Silica *2 | Parts by mass | 40.0 | 40.0 | 40.0 | 40.0 | 40.0 | 40.0 | 40.0 |
| | | Silane coupling agent *3 | | 5.0 | 5.0 | 5.0 | 5.0 | 5.0 | 5.0 | 5.0 |
| | | Oil | | - | - | - | - | - | - | 20.0 |
| | | Stearic acid | | 2.0 | 2.0 | 2.0 | 2.0 | 2.0 | 2.0 | 2.0 |
| | | Antioxidant 6PPD *4 | | 1.0 | 1.0 | 1.0 | 1.0 | 1.0 | 1.0 | 1.0 |
| | Final stage mixing and kneading | Zinc white | | 2.5 | 2.5 | 2.5 | 2.5 | 2.5 | 2.5 | 2.5 |
| | | Vulcanization accelerator DPG *5 | | 0.6 | 0.6 | 0.6 | 0.6 | 0.6 | 0.6 | 0.6 |
| | | Vulcanization accelerator MBTS *6 | | 1.0 | 1.0 | 1.0 | 1.0 | 1.0 | 1.0 | 1.0 |
| | | Vulcanization accelerator TBBD *7 | | 0.6 | 0.6 | 0.6 | 0.6 | 0.6 | 0.6 | 0.6 |
| | | Sulfur | | 1.5 | 1.5 | 1.5 | 1.5 | 1.5 | 1.5 | 1.5 |
| Evaluation | tanδ | | Index | 96 | 97 | 98 | 104 | 98 | 98 | 100 |
| | Wear resistance | | Index | 115 | 114 | 108 | 109 | 114 | 112 | 100 |

| | | | | | | | | | | |
|---|---|---|---|---|---|---|---|---|---|---|
| *1: Product name "#80" manufactured by Asahi Carbon Co., Ltd. *2: Product name "Nipsil AQ" manufactured by Tosoh Silica Corporation, BET surface area: 205 m2/g *3: Bis(3-triethoxysilylpropyl)disulfide (the average sulfur chain length: 2.35), Silane coupling agent, product name "Si75" ® manufactured by Evonic Industries, AG *4: N-(1,3-dimethylbutyl)-N'-phenyl-p-phenylenediamine, product name "Nocrac 6C" manufactured by Ouchi-Shinko Chemical Industrial Co., Ltd. *5: 1,3-diphenylguanidine, product name "Sanceler D" manufactured by SANSHIN CHEMICAL INDUSTRY CO.,LTD. *6: Di-2-benzothiazolyl disulfide, product name "Sanceler DM" manufactured by SANSHIN CHEMICAL INDUSTRY CO.,LTD. *7: N-tert-butyl-2-benzothiazolylsulphenamide, product name "Sanceler NS" manufactured by SANSHIN CHEMICAL INDUSTRY CO.,LTD. | | | | | | | | | | |

It is understood from Tables 5 and 6 that a rubber composition using the modified polymer manufactured by the method of the present disclosure has low-heat generation property and wear resistance equivalent to those of a rubber composition prepared by separately synthesizing a modified polymer for matrix and a low-molecular weight polymer and then blending them.

### INDUSTRIAL APPLICABILITY

The modified polymer manufactured by the method of the present disclosure is applicable, for example, to a rubber composition for use in a tire and the like. The rubber composition of the present disclosure is applicable to a tire and other rubber products. The tire of the present disclosure can be used as a tire for various types of vehicles.

## Claims

1. A method for manufacturing a modified polymer, comprising continuously supplying a raw material monomer containing at least conjugated diene compound, a polymerization initiator containing lithium, 1,2-butadiene and a modification agent into a flow-through reactor, causing the raw material monomer to be continuously polymerized to generate polymer and also causing a portion of the polymer thus generated to be modified with the modification agent, wherein:
the polymerization and the modification are carried out at temperature equal to 110°C or higher; and
a mole ratio (1,2-Bd/Li) of the 1,2-butadiene (1,2-Bd) with respect to lithium (Li) of the polymerization initiator containing lithium is set to be 0.37 or less.

2. The method for manufacturing a modified polymer of claim 1, wherein the modification agent contains at least one of nitrogen atom and silicon atom.

3. The method for manufacturing a modified polymer of claim 1 or 2, wherein the raw material monomer further contains an aromatic vinyl compound.

4. A modified polymer, manufactured by the method for manufacturing a modified polymer of any of claims 1 to 3.

5. The modified polymer of claim 4, which has an average modification rate of 60% or higher, a modification rate of 90% or higher at a molecular weight of 600,000, and a modification rate of 40% or less at a molecular weight of 80,000.

6. A rubber composition, containing the modified polymer of claim 4 or 5.

7. A tire, using the rubber composition of claim 6.
